# EUROPEAN PATENT APPLICATION

(11) **EP 4 553 660 A1**
(43) Date of publication of application: **14.05.2025**
(21) Application number: 23848863.9
(22) Date of filing: 01.03.2023
(51) Int. Cl.: G06F 9/54

(54) **RESOURCE SCHEDULING METHOD AND APPARATUS, AND COMPUTING DEVICE CLUSTER, MEDIUM AND PROGRAM PRODUCT**

(30) Priority: 04.08.2022 CN 202210932565
(71) Applicant: Huawei Cloud Computing Technologies Co., Ltd., Guiyang, Guizhou 550025 (CN)
(72) Inventor: ZHOU, Wenli, Guiyang, Guizhou 550025 (CN); YANG, Meng, Guiyang, Guizhou 550025 (CN); ZHU, Lei, Guiyang, Guizhou 550025 (CN); SU, Li, Guiyang, Guizhou 550025 (CN)
(74) Representative: Isarpatent
(86) International application number: PCT/CN2023/079075
(87) International publication number: WO 2024/027148

(57) **Abstract**

This application relates to a resource scheduling method and apparatus, a computing device cluster, a medium, and a program product. The method is used on a first processor, and the method includes: obtaining a first instruction, where the first instruction indicates a target parameter of a cloud server; determining, based on the first instruction and actual resource usage, a plurality of schemes for scheduling schedulable resources under the target parameter, where when a second processor schedules the schedulable resources for the cloud server according to different scheduling schemes, performances of the cloud server are different; and generating presentation data based on the plurality of scheduling schemes and the corresponding performances of the cloud server, where the presentation data is used for presenting an interface that includes the plurality of scheduling schemes and the corresponding performances of the cloud server. According to the resource scheduling method in an embodiment of this application, a plurality of scheduling schemes can be provided under a same parameter, so that performances of a cloud server that correspond to the plurality of scheduling schemes are different, meeting a need of a user for a cloud server that provides a plurality of performances.

## Description

This application claims priority to Chinese Patent Application No. 202210932565.8, filed with the China National Intellectual Property Administration on August 4, 2022 and entitled "RESOURCE SCHEDULING METHOD AND APPARATUS, COMPUTING DEVICE CLUSTER, MEDIUM, AND PROGRAM PRODUCT", which is incorporated herein by reference in its entirety.

### TECHNICAL FIELD

This application relates to the field of cloud computing, and in particular, to a resource scheduling method and apparatus, a computing device cluster, a medium, and a program product.

### BACKGROUND

Cloud computing is another new innovation in the information age following the Internet and computers. Cloud computing can coordinate a lot of computer resources, so that users can obtain unlimited resources via networks, and the resources obtained are not limited by time or space. For example, a cloud server (elastic cloud server, ECS) is a basic computing component that includes a virtual processor core (virtual CPU, vCPU), a memory, an operating system, and a cloud hard disk. After cloud servers are successfully created, users can use the cloud servers via networks as if they were using their own local computers or local servers.

A created cloud server has a specific specification parameter, for example, a vCPU count and a memory size that correspond to the cloud server. Currently, specification parameters and performances of a cloud server usually correspond to each other on a one-to-one basis. To be specific, a user can adjust a performance of a cloud server only by adjusting a specification parameter of the cloud server. In some cases, for a user, although a performance of a cloud server with a current specification parameter is not appropriate, a performance of the cloud server with a higher or lower specification parameter may not be most appropriate either. Therefore, how to meet a need of a user for a cloud server that provides a plurality of performances becomes a research hotspot in this field.

### SUMMARY

In view of this, a resource scheduling method and apparatus, a computing device cluster, a medium, and a program product are provided. According to the resource scheduling method in an embodiment of this application, a plurality of scheduling schemes can be provided under a same parameter, so that performances of a cloud server that correspond to the plurality of scheduling schemes are different, meeting a need of a user for a cloud server that provides a plurality of performances.

According to a first aspect, an embodiment of this application provides a resource scheduling method. The method is used on a first processor, and the method includes: obtaining a first instruction, where the first instruction indicates a target parameter of a cloud server; determining, based on the first instruction and actual resource usage, a plurality of schemes for scheduling schedulable resources under the target parameter, where the schedulable resources are scheduled by at least one second processor that is based on a non-uniform memory access architecture, and when a second processor schedules the schedulable resources for the cloud server according to different scheduling schemes, performances of the cloud server are different; and generating presentation data based on the plurality of scheduling schemes and the corresponding performances of the cloud server, where the presentation data is used for presenting an interface that includes the plurality of scheduling schemes and the corresponding performances of the cloud server.

According to the resource scheduling method in this embodiment of this application, a first processor obtains a first instruction that indicates a target parameter of a cloud server, and may determine, based on the first instruction and actual resource usage, a plurality of schemes for scheduling schedulable resources under the target parameter. Therefore, under the same target parameter, a plurality of schemes for scheduling the schedulable resources are available for selection, improving flexibility in selecting a resource scheduling scheme. In addition, the schedulable resources are scheduled by at least one second processor that is based on the non-uniform memory access architecture, and when a second processor schedules the schedulable resources for the cloud server according to different scheduling schemes, performances of the cloud server are different. Therefore, corresponding to the plurality of scheduling schemes, the performances of the cloud server vary. Further, presentation data is generated based on the plurality of scheduling schemes and the corresponding performances of the cloud server, where the presentation data is used for presenting an interface that includes the plurality of scheduling schemes and the corresponding performances of the cloud server. As such, a need of a user for a cloud server that provides a plurality of performances can be met, and a performance of a cloud server can be flexibly adjusted by adjusting a scheduling scheme, improving user experience.

According to the first aspect, in a first possible implementation of the resource scheduling method, the resources include virtual processor cores; for each second processor, the second processor includes at least one physical processing node; the physical processing node is configured to schedule and run virtual processor cores; and the target parameter includes a target quantity of virtual processor cores corresponding to the cloud server and a target memory size of the cloud server.

According to the first possible implementation of the first aspect, in a second possible implementation of the resource scheduling method, the plurality of scheduling schemes include: virtual processor cores corresponding to the cloud server and a memory of the cloud server are provided by a single physical processing node; and/or virtual processor cores corresponding to the cloud server and a memory of the cloud server are provided by two or more physical processing nodes, and all the physical processing nodes provide a same quantity of virtual processor cores and a memory of a same size; and/or virtual processor cores corresponding to the cloud server and a memory of the cloud server are provided by two or more physical processing nodes, and at least two physical processing nodes provide different quantities of virtual processor cores and/or memories of different sizes.

In this manner, a small quantity of virtual processor cores remaining on each physical node can also be scheduled and run, improving utilization of resources, and reducing hardware costs and data processing costs that are necessary for creating cloud servers. In addition, with a plurality of scheduling schemes, more options are also provided for resource scheduling, improving flexibility of resource scheduling.

According to the second possible implementation of the first aspect, in a third possible implementation of the resource scheduling method, when the virtual processor cores corresponding to the cloud server and the memory of the cloud server are provided by two or more physical processing nodes, the two or more physical processing nodes are located in a same computer.

The finally obtained cloud server can have an advantage that under the non-uniform memory access architecture, a processor accesses a local memory (memory) faster than a non-local memory, only when resources of physical processing nodes located in a same computer (a terminal device) are scheduled. In this manner, performance of the second processor corresponding to a case in which the second processor schedules the schedulable resources for the cloud server is improved.

According to any one of the first aspect or the foregoing possible implementations of the first aspect, in a fourth possible implementation of the resource scheduling method, after the generating presentation data based on the plurality of scheduling schemes and the corresponding performances of the cloud server, the method further includes: receiving a second instruction from a user, where the second instruction indicates one of the plurality of scheduling schemes; enabling the second processor to schedule the schedulable resources for the cloud server according to the scheduling scheme indicated by the second instruction; and updating the actual resource usage based on a status of resources of the second processor.

In this manner, a cloud server meeting requirements can be obtained, and accuracy of actual resource usage can be ensured.

According to any one of the first aspect or the foregoing possible implementations of the first aspect, in a fifth possible implementation of the resource scheduling method, the obtaining a first instruction includes: receiving the first instruction from the user; or obtaining the user's usage of a cloud server with a current parameter, where the current parameter includes a current quantity of virtual processor cores corresponding to the cloud server and a current memory size of the cloud server; and obtaining the first instruction based on the usage.

In this manner, the following can be both implemented, improving users' use experience: When a user wants to purchase a new cloud server or adjust a purchased cloud server, a plurality of scheduling schemes are determined based on a target parameter indicated by the user; and an appropriate target parameter is proactively determined and a plurality of scheduling schemes are recommended for a user who uses a cloud server with an inappropriate performance.

According to the fifth possible implementation of the first aspect, in a sixth possible implementation of the resource scheduling method, the obtaining the first instruction based on the usage includes: determining a minimum quantity of virtual processor cores and a minimum memory size that meet the usage; and using the minimum quantity of virtual processor cores and the minimum memory size as the target parameter, to obtain the first instruction.

The minimum quantity of virtual processor cores and the minimum memory size that are determined in this manner may be used as the target parameter. In this case, even if a user does not indicate a specific target parameter, the first processor can determine an appropriate target parameter and obtain the first instruction, so that a plurality of scheduling schemes can still be presented, further improving user experience.

According to the fifth possible implementation of the first aspect, in a seventh possible implementation of the resource scheduling method, when the first instruction is from the user, the method further includes: obtaining the user's usage of a cloud server with a current parameter, where the current parameter includes a current quantity of virtual processor cores corresponding to the cloud server and a current memory size of the cloud server; and the generating presentation data based on the plurality of scheduling schemes and the corresponding performances of the cloud server includes: generating presentation data in descending order of degrees of proximity of the plurality of scheduling schemes to the usage, where in an interface presented based on the presentation data, the plurality of scheduling schemes are presented in descending order of the degrees of proximity of the plurality of scheduling schemes to the usage.

In this manner, when the user indicates a specific target parameter, effect of presenting a plurality of scheduling schemes to be presented can be alternatively optimized based on the user's usage of the cloud server with the current parameter, improving capabilities of presenting a plurality of scheduling schemes based on presentation data generated by using the resource scheduling method.

According to a second aspect, an embodiment of this application provides a resource scheduling apparatus. The apparatus includes: a first obtaining module, configured to obtain a first instruction, where the first instruction indicates a target parameter of a cloud server; a determining module, configured to determine, based on the first instruction and actual resource usage, a plurality of schemes for scheduling schedulable resources under the target parameter, where the schedulable resources are scheduled by at least one second processor that is based on a non-uniform memory access architecture, and when a second processor schedules the schedulable resources for the cloud server according to different scheduling schemes, performances of the cloud server are different; and a generation module, configured to generate presentation data based on the plurality of scheduling schemes and the corresponding performances of the cloud server, where the presentation data is used for presenting an interface that includes the plurality of scheduling schemes and the corresponding performances of the cloud server.

According to the second aspect, in a first possible implementation of the resource scheduling apparatus, the resources include virtual processor cores; for each second processor, the second processor includes at least one physical processing node; the physical processing node is configured to schedule and run virtual processor cores; and the target parameter includes a target quantity of virtual processor cores corresponding to the cloud server and a target memory size of the cloud server.

According to the first possible implementation of the second aspect, in a second possible implementation of the resource scheduling apparatus, the plurality of scheduling schemes include: virtual processor cores corresponding to the cloud server and a memory of the cloud server are provided by a single physical processing node; and/or virtual processor cores corresponding to the cloud server and a memory of the cloud server are provided by two or more physical processing nodes, and all the physical processing nodes provide a same quantity of virtual processor cores and a memory of a same size; and/or virtual processor cores corresponding to the cloud server and a memory of the cloud server are provided by two or more physical processing nodes, and at least two physical processing nodes provide different quantities of virtual processor cores and/or memories of different sizes.

According to the second possible implementation of the second aspect, in a third possible implementation of the resource scheduling apparatus, when the virtual processor cores corresponding to the cloud server and the memory of the cloud server are provided by two or more physical processing nodes, the two or more physical processing nodes are located in a same computer.

According to any one of the second aspect or the foregoing possible implementations of the second aspect, in a fourth possible implementation of the resource scheduling apparatus, the apparatus further includes: a receiving module, configured to receive a second instruction from a user, where the second instruction indicates one of the plurality of scheduling schemes; a scheduling module, configured to enable the second processor to schedule the schedulable resources for the cloud server according to the scheduling scheme indicated by the second instruction; and an updating module, configured to update the actual resource usage based on a status of resources of the second processor.

According to any one of the second aspect or the foregoing possible implementations of the second aspect, in a fifth possible implementation of the resource scheduling apparatus, the first obtaining module includes: a receiving unit, configured to receive the first instruction from the user; or an obtaining unit, configured to obtain the user's usage of a cloud server with a current parameter, where the current parameter includes a current quantity of virtual processor cores corresponding to the cloud server and a current memory size of the cloud server; and a processing unit, configured to obtain the first instruction based on the usage.

According to the fifth possible implementation of the second aspect, in a sixth possible implementation of the resource scheduling apparatus, the processing unit includes: a determining subunit, configured to determine a minimum quantity of virtual processor cores and a minimum memory size that meet the usage; and a processing subunit, configured to use the minimum quantity of virtual processor cores and the minimum memory size as the target parameter, to obtain the first instruction.

According to the fifth possible implementation of the second aspect, in a seventh possible implementation of the resource scheduling apparatus, when the first instruction is from the user, the apparatus further includes: a second obtaining module, configured to obtain the user's usage of a cloud server with a current parameter, where the current parameter includes a current quantity of virtual processor cores corresponding to the cloud server and a current memory size of the cloud server; and the generation module includes: a generation unit, configured to generate presentation data in descending order of degrees of proximity of the plurality of scheduling schemes to the usage, where in an interface presented based on the presentation data, the plurality of scheduling schemes are presented in descending order of the degrees of proximity of the plurality of scheduling schemes to the usage.

According to a third aspect, an embodiment of this application provides a computing device cluster. The computing device cluster includes at least one computing device, and each computing device includes a first processor and a memory. A first processor in the at least one computing device is configured to execute instructions stored in a memory in the at least one computing device, so that the computing device cluster performs the resource scheduling method according to one or more of the first aspect or the plurality of possible implementations of the first aspect.

According to a fourth aspect, an embodiment of this application provides a computer-readable storage medium. The computer-readable storage medium includes computer program instructions. When the computer program instructions are executed by a computing device cluster, the computing device cluster performs the resource scheduling method according to one or more of the first aspect or the plurality of possible implementations of the first aspect.

According to a fifth aspect, an embodiment of this application provides a computer program product including instructions. When the instructions are run by a computing device cluster, the computing device cluster is enabled to perform the resource scheduling method according to one or more of the first aspect or the plurality of possible implementations of the first aspect.

These and other aspects of this application are more concise and easier to understand in descriptions of the following (a plurality of) embodiments.

### BRIEF DESCRIPTION OF DRAWINGS

The accompanying drawings that are included in this specification and constitute part of this specification show example embodiments, features, and aspects of this application together with this specification, and are used for explaining principles of this application.
FIG. 1 shows an example of a solution to adjusting a specification parameter of a cloud server ECS in the conventional technology;
FIG. 2 shows an example application scenario of a resource scheduling method according to an embodiment of this application;
FIG. 3 is a schematic flowchart of a resource scheduling method according to an embodiment of this application;
FIG. 4 shows an example of a plurality of scheduling schemes according to an embodiment of this application;
FIG. 5 is a schematic flowchart of a resource scheduling method according to an embodiment of this application;
FIG. 6 is a schematic flowchart of a resource scheduling method according to an embodiment of this application;
FIG. 7 is a diagram of a structure of a resource scheduling apparatus according to an embodiment of this application;
FIG. 8 is an example diagram of a structure of a computing device according to an embodiment of this application;
FIG. 9 is an example diagram of a structure of a computing device cluster according to an embodiment of this application; and
FIG. 10 is a diagram of a manner of connection between computing device clusters according to an embodiment of this application.

### DESCRIPTION OF EMBODIMENTS

The following describes various example embodiments, features, and aspects of this application in detail with reference to the accompanying drawings. Identical reference numerals in the accompanying drawings represent elements with same or similar functions. Although various aspects of embodiments are illustrated in the accompanying drawing, the accompanying drawings need not be drawn to scale unless otherwise indicated.

The specific word "example" used herein means "to be used as an example or embodiment or to be used for illustrative purposes". Any embodiment described as "an example" herein need not be construed as being superior or better than other embodiments.

In addition, to better describe this application, numerous specific details are given in the specific implementations below. Persons skilled in the art should understand that this application can also be implemented without some specific details. In some instances, methods, means, elements, and circuits that are familiar to persons skilled in the art are not described in detail, to highlight main purposes of this application.

Some of terms that appear in this specification are explained below.

Virtual processor core (virtual CPU, vCPU): One central processing unit (central processing unit, CPU) may include several physical processor cores. The hyper-threading (hyper-threading, HT) technology can enable one physical processor core to concurrently run a plurality of threads. One thread can be considered as one virtual processor core vCPU.

Non-uniform memory access (non-uniform memory access, NUMA) architecture: A NUMA architecture is an architecture common to modern computers. As CPU performance improvement gradually slows down in recent years, a manner in which a plurality of CPUs work together to improve performance emerges. The NUMA architecture is a computer architecture optimization solution that emerges along with the manner. In the NUMA architecture, a plurality of physical processing nodes (usually referred to as NUMA nodes) are set on a single processor. Under the NUMA architecture, a processor accesses its local memory faster than a non-local memory. Usually, a single-NUMA architecture and a dual-NUMA architecture are mainly used in the industry. When the single-NUMA architecture is used, virtual processor cores and a memory that are included in an ECS are provided by a single NUMA node. When the dual-NUMA architecture is used, virtual processor cores and a memory that are included in an ECS are jointly provided by two NUMA nodes.

Cloud server (elastic cloud server, ECS): A cloud server is a basic computing component that includes virtual processor cores, a memory, an operating system, and a cloud hard disk. After cloud servers are successfully created, users can use the cloud servers on clouds as if they were using local computers or physical servers.

The following describes a cloud computing technology and cloud servers in the conventional technology.

Cloud computing is another new innovation in the information age following the Internet and computers. Cloud computing is a big leap forward in the information age. The future may be the era of cloud computing. Although there are many definitions of cloud computing currently, basic meanings of cloud computing are consistent in general. To be specific, cloud computing is highly scalable and demanding. A core of cloud computing is being capable of coordinating a lot of computer resources, so that users can obtain unlimited resources via networks, and the resources obtained are not limited by time or space.

Currently, the non-uniform memory access architecture (NUMA) is a computer architecture design manner widely used in the industry, and is commonly used in cloud servers (ECSs) launched by cloud vendors. The NUMA architecture is a CPU design manner that emerges when the computer architecture enters the multi-core era from the single-core era, and can speed up computer processing by setting NUMA nodes on a physical processor and allocating all virtual processor cores vCPUs on the physical processor to different NUMA nodes. When virtualized cloud servers ECSs are created by using the NUMA architecture, for cloud servers ECSs with a same specification parameter (a quantity of virtual processor cores vCPUs, a memory size, and the like that correspond to a cloud server ECS), performances of the cloud servers ECSs vary with policies for scheduling virtual processor cores vCPUs. The status quo in the industry is as follows: single-NUMA architecture (all virtual processor cores vCPUs corresponding to a same cloud server ECS are provided by a single NUMA node) > dual-NUMA architecture with vCPUs evenly placed (all virtual processor cores vCPUs corresponding to a same cloud server ECS are provided by two NUMA nodes, and the two nodes each provide a same quantity of vCPUs) > dual-NUMA architecture with vCPUs unevenly placed (all virtual processor cores vCPUs corresponding to a same cloud server ECS are provided by two NUMA nodes, and the two nodes provide different quantities of vCPUs). Therefore, to ensure that a performance of a cloud server ECS is more advantageous than that of a competitor's cloud server ECS with a same specification parameter, in the conventional technology, a cloud vendor usually selects the single-NUMA architecture or the dual-NUMA architecture with vCPUs evenly placed policy as a policy for scheduling virtual processor cores vCPUs corresponding to the cloud server ECS, during creation of the cloud server ECS.

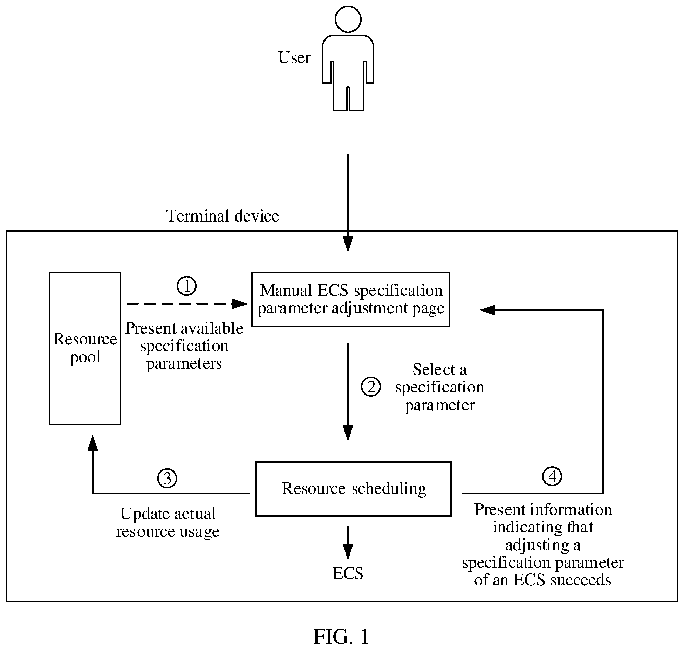

In the conventional technology, the selected policy for scheduling virtual processor cores vCPUs corresponding to a cloud server ECS also affects cloud vendors' solutions to adjusting a specification parameter of a cloud server ECS. FIG. 1 shows an example of a solution to adjusting a specification parameter of a cloud server ECS in the conventional technology.

As shown in FIG. 1, a user first accesses a manual ECS specification parameter adjustment page. In a first step, after the user gives an instruction of adjusting a specification parameter of a cloud server ECS, a terminal device first determines available specification parameters based on resource usage of the terminal device that can provide resources (that is, a resource pool in FIG. 1), and presents the available specification parameters on the manual ECS specification parameter adjustment page. In a second step, the user selects a specification parameter from the specification parameters presented. In a third step, the terminal device creates, based on the specification parameter, a cloud server ECS that meets the specification parameter selected by the user, and updates the resource usage of the terminal device that can provide resources. In a fourth step, information indicating that adjusting the specification parameter of the cloud server ECS succeeds is presented on the manual ECS specification parameter adjustment page.

However, in the solution to adjusting a specification parameter of a cloud server ECS in the conventional technology, each optional adjustment scheme has a fixed virtual processor core vCPU specification parameter (or instance specification/parameter/type) and a corresponding performance metric. To be specific, when a user plans to make a slight adjustment to a performance of a purchased cloud server ECS, the user usually can only make a trade-off between costs and performance due to the following reasons: A performance of a cloud server ECS can be changed only by adjusting a specification parameter or an instance type; the specification parameters or instance types are further bound to optional resource scheduling schemes on a one-to-one basis; and none of the optional resource scheduling schemes may be a best performance scheme for the user. **In** other words, resource scheduling schemes for a cloud server ECS in the conventional technology cannot meet a need of a user for a cloud server that provides a plurality of performances yet.

To resolve the foregoing technical problem, this application provides a resource scheduling method. According to the resource scheduling method in an embodiment of this application, a plurality of scheduling schemes can be provided under a same parameter, so that performances of a cloud server that correspond to the plurality of scheduling schemes are different, meeting a need of a user for a cloud server that provides a plurality of performances.

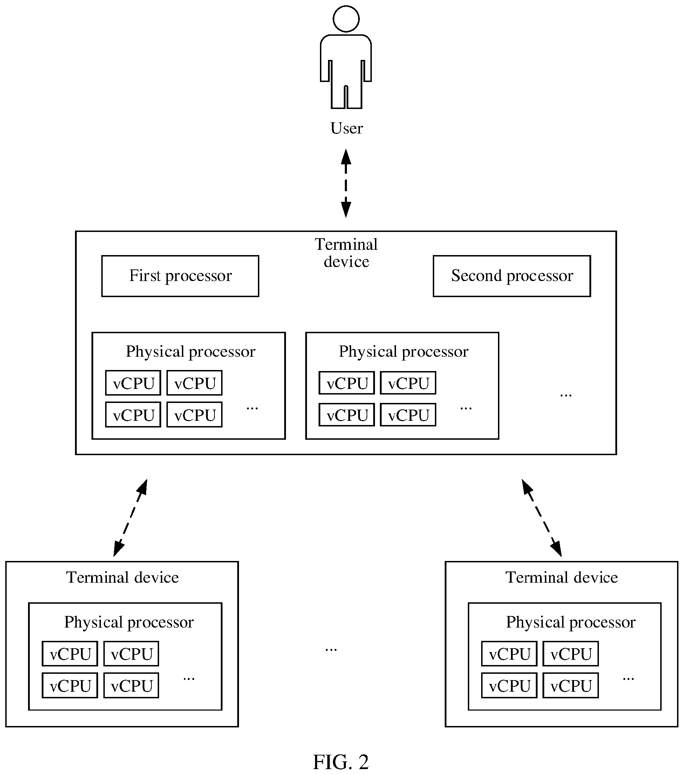

FIG. 2 shows an example application scenario of a resource scheduling method according to an embodiment of this application.

For example, the example application scenario may include at least one terminal device. The terminal device in this application may be a smartphone, a netbook, a tablet computer, a notebook computer, a wearable electronic device (for example, a smart band or a smart watch), a TV, a virtual reality device, a stereo, electronic ink, or the like that is based on a non-uniform memory access architecture (MUMA). The resource scheduling method in this application may be used on a first processor in a terminal device. Other terminal devices may communicate with the terminal device. A plurality of second processors based on the non-uniform memory access architecture may be further set on the terminal device and the other terminal devices that can communicate with the terminal device. On each second processor, a plurality of physical processor cores (not shown) may be set. Each physical processor core may run a plurality of virtual processor cores (vCPUs). Under the MUMA architecture, at least one MUMA node (not shown, also referred to as a physical processing node below) may be set on each second processor, and the plurality of physical processor cores on each second processor may be allocated to at least one MUMA node. When there are two or more MUMA nodes, the plurality of physical processor cores may be evenly or unevenly allocated to the MUMA nodes. This is not limited in this application.

The resource scheduling method in this embodiment of this application may be used when a user purchases a cloud server ECS or when a user adjusts a purchased cloud server ECS. The resource scheduling method may be performed by the first processor, and is used to determine a plurality of schemes for scheduling schedulable resources under a target parameter (for example, a specification parameter that a user selects when purchasing an ECS, or a specification parameter that a user selects when adjusting a performance of a purchased cloud server ECS, or a parameter that is determined based on a user's usage of a cloud server with a current parameter). The schedulable resources may be virtual processor cores that remain in the MUMA nodes in the terminal devices and that are not provided to any cloud server ECS for use yet. The first processor generates presentation data. The presentation data is used for presenting an interface that includes the plurality of scheduling schemes and corresponding performances of the cloud server, so that the user selects a scheduling scheme. Optionally, when the presentation data is generated, the presentation data may be generated based on the user's usage of a cloud server with a current parameter, to adjust an order in which the plurality of scheduling schemes are presented on the interface. Further, based on a scheduling scheme selected by the user, the first processor may enable the second processor to complete resource scheduling as indicated by the scheduling scheme, so that at least one MUMA node provides virtual processor cores that meet the specification parameter. In this way, the cloud server ECS is created or adjusted.

The first processor may be the same as or different from the second processor. This is not limited in this application.

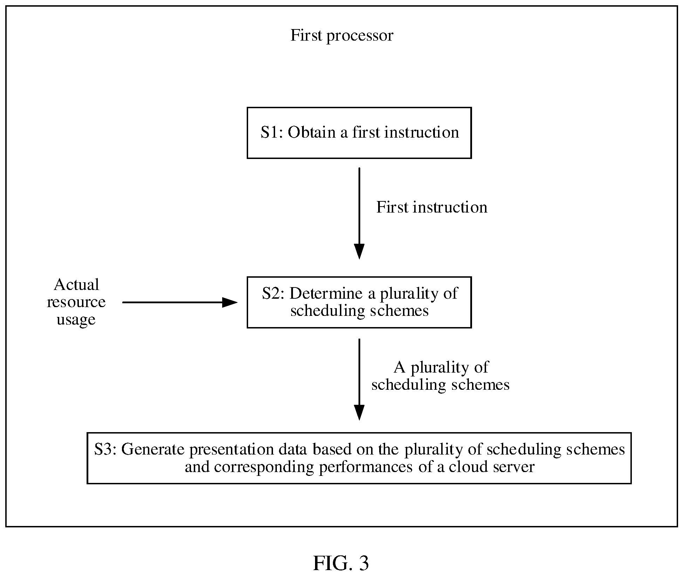

The following describes an example workflow of a resource scheduling method according to an embodiment of this application. FIG. 3 is a schematic flowchart of a resource scheduling method according to an embodiment of this application.

As shown in FIG. 3, in a possible implementation, this application provides a resource scheduling method. The method is used on a first processor, and the method includes steps S1 to S3.

Step S1: Obtain a first instruction, where the first instruction indicates a target parameter of a cloud server.

For example, with reference to the foregoing descriptions and related descriptions of FIG. 2, the target parameter may be a specification parameter that a user selects when purchasing a cloud server ECS, or a specification parameter that a user selects when adjusting a performance of a purchased cloud server ECS, or a parameter that is determined based on a user's usage of a cloud server ECS with a current parameter. The target parameter may include a target quantity of virtual processor cores vCPUs corresponding to the cloud server ECS and a target memory size of the cloud server ECS. A specific type of the target parameter is not limited in this embodiment of this application.

Step S2: Determine, based on the first instruction and actual resource usage, a plurality of schemes for scheduling schedulable resources under the target parameter, where the schedulable resources are scheduled by at least one second processor that is based on a non-uniform memory access architecture, and when a second processor schedules the schedulable resources for the cloud server according to different scheduling schemes, performances of the cloud server are different.

For example, the actual resource usage may include virtual processor cores that are in MUMA nodes in terminal devices (a terminal device on which the first processor resides and a terminal device that can communicate with the first processor) and that are already provided, objects to which the virtual processor cores are provided, and virtual processor cores that are in the MUMA nodes in the terminal devices and that are not provided to any cloud server ECS for use yet, and may be recorded based on a resource view (not shown) or the like. In this case, the schedulable resources may be the virtual processor cores that remain in the MUMA nodes in the terminal devices and that are not provided to any cloud server ECS for use yet. The schedulable resources may be scheduled by at least one second processor that is based on the non-uniform memory access architecture. Scheduling may mean that a second processor allocates the schedulable resources to the cloud server according to a scheme. A scheduling scheme may indicate resources that are to be allocated to the cloud server. A plurality of schemes for scheduling the schedulable resources under the target parameter may be determined based on the first instruction and the actual resource usage. **In** addition, when the schedulable resources are scheduled for the cloud server according to different scheduling schemes, performances of the cloud server may be different.

Step S3: Generate presentation data based on the plurality of scheduling schemes and the corresponding performances of the cloud server, where the presentation data is used for presenting an interface that includes the plurality of scheduling schemes and the corresponding performances of the cloud server. The presentation data may be code that is generated by the first processor and that corresponds a to-be-presented interface, or the like. After the presentation data is parsed by a browser on a client (not shown) used by the user or the like, the to-be-presented interface may be presented. The interface may be an ECS user interface or an ECS specification recommendation interface. The plurality of scheduling schemes and the corresponding performances of the cloud server that are presented in the interface may be selected by the user. In this case, the user may select a corresponding scheduling scheme based on a requirement for performance, so that the second processor can schedule resources according to the scheduling scheme selected by the user. In this way, a cloud server providing the required performance can be obtained.

According to the resource scheduling method in this embodiment of this application, a first server obtains a first instruction that indicates a target parameter of a cloud server, and may determine, based on the first instruction and actual resource usage, a plurality of schemes for scheduling schedulable resources under the target parameter. Therefore, under the same target parameter, a plurality of schemes for scheduling the schedulable resources are available for selection, improving flexibility in selecting a resource scheduling scheme. In addition, the schedulable resources are scheduled by at least one second processor that is based on the non-uniform memory access architecture, and when a second processor schedules the schedulable resources for the cloud server according to different scheduling schemes, performances of the cloud server are different. Therefore, corresponding to the plurality of scheduling schemes, the performances of the cloud server vary. Further, presentation data is generated based on the plurality of scheduling schemes and the corresponding performances of the cloud server, where the presentation data is used for presenting an interface that includes the plurality of scheduling schemes and the corresponding performances of the cloud server. As such, a need of a user for a cloud server that provides a plurality of performances can be met, and a performance of a cloud server can be flexibly adjusted by adjusting a scheduling scheme, improving user experience.

In a possible implementation, the resources include virtual processor cores; for each second processor, the second processor includes at least one physical processing node; the physical processing node is configured to schedule and run virtual processor cores; and the target parameter includes a target quantity of virtual processor cores corresponding to the cloud server and a target memory size of the cloud server.

The physical processing node is the NUMA node described above. Each second processor may include at least one physical processing node. Therefore, a terminal device (physical host) on which the second processor resides may include at least one physical processing node. For example, a terminal device includes one second processor. The second processor includes 10 physical processor cores. Each physical processor core may run (or control) 10 virtual processor cores. The second processor includes two physical processing nodes in the non-uniform memory access architecture. Each physical processing node includes five physical processor cores, that is, each physical processing node is allowed to provide (schedule and run) 50 virtual processor cores. Each time a cloud server is created and resources of the terminal device need to be used, virtual processor cores corresponding to the cloud server may be provided by one or two of the two physical processing nodes. For any physical processing node on the terminal device, after virtual processor cores that the physical processing node provides to the cloud server are sequentially deducted from the 50 virtual processor cores on the physical processing node, virtual processor cores remaining on all the physical processing nodes on the terminal device are schedulable resources of the terminal device.

The target parameter may include the target quantity of the virtual processor cores corresponding to the cloud server and the target memory size of the cloud server. In the conventional technology, the two usually correspond to each other on a one-to-one basis. For example, when a target quantity of virtual processor cores corresponding to a cloud server is 4, a target memory size of the cloud server may be 8 GB; or when a target quantity of virtual processor cores corresponding to a cloud server is 8, a target memory size of the cloud server may be 16 GB. In this embodiment of this application, a relationship between a target quantity of virtual processor cores corresponding to a cloud server and a target memory size of the cloud server is not limited. For a purpose of providing a clear description in the following part, an example is used in which the target quantity of the virtual processor cores corresponding to the cloud server and the target memory size of the cloud server that are included in the target parameter are 8 and 16 GB, respectively.

It can be learned from the foregoing description that for any physical processing node on the terminal device, after virtual processor cores that the physical processing node provides to the cloud server are sequentially deducted from the 50 virtual processor cores on the physical processing node, virtual processor cores remaining on all the physical processing nodes on the terminal device are schedulable resources of the terminal device. For example, according to a resource scheduling solution in the conventional technology, if a cloud server with eight virtual processor cores and a memory of 16 GB is created each time, and virtual processor cores are provided by a single physical processing node each time a cloud server is created, each physical processing node can provide resources for a maximum of six cloud servers, and finally the two remaining virtual processor cores cannot be used to provide resources for cloud servers (50-6×8=2); or if virtual processor cores are equally provided by two physical processing nodes each time a cloud server is created, that is, each physical processing node provides four virtual processor cores for each cloud server, each physical processing node can provide resources for a maximum of 12 cloud servers, and finally the two remaining virtual processor cores cannot be used to provide resources for cloud servers either (50-12×4=2). In addition, these remaining virtual processor cores are not scheduled because they are too few to meet a scheduling requirement. The virtual processor cores may be referred to as "vCPU fragments" in the conventional technology. There is a high probability that these "vCPU fragments" are not used, resulting in an increase in costs.

According to a plurality of scheduling schemes provided in this embodiment of this application, utilization of "vCPU fragments" can be improved. The following describes an example of a plurality of scheduling schemes provided in this embodiment of this application.

In a possible implementation, the plurality of scheduling schemes include:
virtual processor cores corresponding to the cloud server and a memory of the cloud server are provided by a single physical processing node; and/or
virtual processor cores corresponding to the cloud server and a memory of the cloud server are provided by two or more physical processing nodes, and all the physical processing nodes provide a same quantity of virtual processor cores and a memory of a same size; and/or
virtual processor cores corresponding to the cloud server and a memory of the cloud server are provided by two or more physical processing nodes, and at least two physical processing nodes provide different quantities of virtual processor cores and/or memories of different sizes.

**In** this manner, a small quantity of virtual processor cores remaining on each physical node can also be scheduled and run, improving utilization of resources, and reducing hardware costs and data processing costs that are necessary for creating cloud servers. **In** addition, with a plurality of scheduling schemes, more options are also provided for resource scheduling, improving flexibility of resource scheduling.

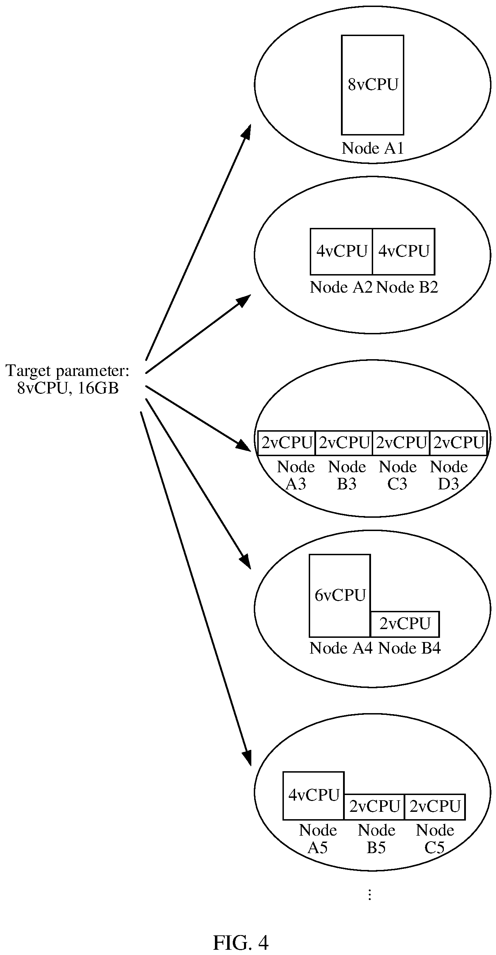

FIG. 4 shows an example of a plurality of scheduling schemes according to an embodiment of this application.

As shown in FIG. 4, for example, an example is used in which the target quantity of the virtual processor cores corresponding to the cloud server and the target memory size of the cloud server that are included in the target parameter are 8 and 16 GB, respectively. If the scheduling scheme in which virtual processor cores corresponding to the cloud server and a memory of the cloud server are provided by a single physical processing node is used, the single physical processing node needs to provide eight virtual processor cores and a memory of 16 GB. In step S2, when the scheduling schemes are determined, it may be first determined, based on resource usage, whether there is a terminal device that includes a physical processing node capable of providing eight virtual processor cores and a memory of 16 GB alone. If there is a physical processing node that meets the requirement (a node A1), it is then determined that a scheduling scheme in which a single physical processing node needs to provide eight virtual processor cores and a memory of 16 GB exists. The scheduling scheme is then displayed in step S3.

If the scheduling scheme in which virtual processor cores corresponding to the cloud server and a memory of the cloud server are provided by two or more physical processing nodes, and all the physical processing nodes provide a same quantity of virtual processor cores and a memory of a same size is used, and two physical processing nodes are used as an example, the two physical processing nodes each need to provide four virtual processor cores and a memory of 8 GB. In step S2, when the scheduling schemes are determined, it may be first determined, based on resource usage, whether there is a terminal device that includes two physical processing nodes capable of providing four virtual processor cores and a memory of 8 GB each. If there are physical processing nodes that meet the requirement (a node A2 and a node B2), it is then determined that a scheduling scheme in which two physical processing nodes each need to provide four virtual processor cores and a memory of 8 GB exists. The scheduling scheme is then displayed in step S3.

If four physical processing nodes are used as an example, the four physical processing nodes each need to provide two virtual processor cores and a memory of 4 GB. If the following is determined based on resource usage when the scheduling schemes are determined in step S2: physical processing nodes in a terminal device meet a requirement of including two physical processing nodes capable of providing four virtual processor cores and a memory of 8 GB each, and the physical processing nodes in the terminal device or physical processing nodes in another terminal device further meet a requirement of including four physical processing nodes capable of providing two virtual processor cores and a memory of 4 GB each (nodes A3 to D3), it can be determined that a scheduling scheme in which two physical processing nodes each need to provide four virtual processor cores and a memory of 8 GB may coexist with a scheduling scheme in which four physical processing nodes each need to provide two virtual processor cores and a memory of 4 GB. The two scheduling schemes may be presented together in the interface that includes the plurality of scheduling schemes and the corresponding performances of the cloud server.

If the scheduling scheme in which virtual processor cores corresponding to the cloud server and a memory of the cloud server are provided by two or more physical processing nodes, and at least two physical processing nodes provide different quantities of virtual processor cores and/or memories of different sizes is used, and two physical processing nodes are used as an example, one of the two physical processing nodes may need to provide, for example, six virtual processor cores and a memory of 12 GB, and the other physical processing node may need to provide, for example, two virtual processor cores and a memory of 4 GB. In step S2, when the scheduling schemes are determined, it may be first determined, based on resource usage, whether there is a terminal device that includes a physical processing node capable of providing six virtual processor cores and a memory of 12 GB and a physical processing node capable of providing two virtual processor cores and a memory of 4 GB. If there are physical processing nodes that meet the requirement (a node A4 and a node B4), it can be determined that a scheduling scheme in which one physical processing node provides six virtual processor cores and a memory of 12 GB and the other physical processing node provides two virtual processor cores and a memory of 4 GB exists. The scheduling scheme is then displayed in step S3.

If three physical processing nodes are used as an example, one of the three physical processing nodes may need to provide, for example, four virtual processor cores and a memory of 8 GB, and the other two physical processing nodes each may need to provide, for example, two virtual processor cores and a memory of 4 GB. If the following is determined based on resource usage when the scheduling schemes are determined in step S2: physical processing nodes in a terminal device meet a requirement of including a physical processing node capable of providing six virtual processor cores and a memory of 12 GB and a physical processing node capable of providing two virtual processor cores and a memory of 4 GB, and the physical processing nodes in the terminal device or physical processing nodes in another terminal device further meet a requirement of including one physical processing node capable of providing four virtual processor cores and a memory of 8 GB (a node A5) and two physical processing nodes capable of providing two virtual processor cores and a memory of 4 GB each (a node B5 and a node C5), it can be determined that a scheduling scheme in which one physical processing node provides six virtual processor cores and a memory of 12 GB and the other physical processing node provides two virtual processor cores and a memory of 4 GB may coexist with a scheduling scheme in which one physical processing node provides four virtual processor cores and a memory of 8 GB and the other two physical processing nodes each need to provide two virtual processor cores and a memory of 4 GB. The two scheduling schemes may be presented together in the interface that includes the plurality of scheduling schemes and the corresponding performances of the cloud server.

Persons skilled in the art should understand that it is only required that physical nodes in a terminal device can meet requirements of the plurality of scheduling schemes. In this application, none of the following is limited: a specific quantity of physical processing nodes that provide virtual processor cores and memories in each scheduling scheme, a quantity of virtual processor cores and a size of a memory provided by each physical processing node, and a specific quantity of scheduling schemes presented.

It can be understood that in a plurality of scheduling schemes, when a smaller quantity of physical processing nodes are configured to provide virtual processor cores corresponding to a cloud server and a memory of the cloud server, a performance of the finally obtained cloud server is better; and for scheduling schemes in which a same quantity of physical processing nodes are configured to provide virtual processor cores corresponding to a cloud server and a memory of the cloud server, when a single physical processing node provides a smaller quantity of virtual processor cores, a performance of the finally obtained cloud server is poorer. Optionally, in step S3, when the presentation data is generated, the plurality of scheduling schemes and the corresponding performances of the cloud server may be ordered by performance, to generate the presentation data. In this case, the plurality of scheduling schemes and the corresponding performances of the cloud server that are to be presented may also be presented in order of performances of the cloud server, to achieve better presentation. Table 1 shows an example of presenting the plurality of scheduling schemes and the corresponding performances of the cloud server according to this embodiment of this application.

**Table 1**

| Name of a scheduling scheme | vCPU count/Memory | CPU type | Reference/Maximum bandwidth | Packets transmitted/received over an intranet | Performance metric of a cloud server |
|---|---|---|---|---|---|
| s6.2xlarge.2-A | 8 vCPUs\|16 GB | Intel Cascade Lake 2.6 GHz | 0.75/3 Gbit/s | 500,000 | 100% |
| s6.2xlarge.2-B | (4+4) vCPUs\|16 GB | Intel Cascade Lake 2.6 GHz | 0.75/3 Gbit/s | 400,000 | 80% |
| s6.2xlarge.2-C | (6+2) vCPUs\|16 GB | Intel Cascade Lake 2.6 GHz | 0.75/3 Gbit/s | 350,000 | 75% |

It can be learned from Table 1 that when the target quantity of the virtual processor cores corresponding to the cloud server and the target memory size of the cloud server that are included in the target parameter are 8 and 16 GB, respectively, a performance of the cloud server (75%) corresponding to the scheduling scheme in which one physical processing node provides six virtual processor cores and a memory of 12 GB and the other physical processing node provides two virtual processor cores and a memory of 4 GB (a name of the scheduling scheme is s6.2xlarge.2-C) is lower than a performance of the cloud server (80%) corresponding to the scheduling scheme in which two physical processing nodes each need to provide four virtual processor cores and a memory of 8 GB (a name of the scheduling scheme is s6.2xlarge.2-B), and the performance of the cloud server corresponding to the scheduling scheme named s6.2xlarge.2-B is lower than a performance of the cloud server corresponding to the scheduling scheme in which a single physical processing node needs to provide eight virtual processor cores and a memory of 16 GB (a name of the scheduling scheme is s6.2xlarge.2-A).

The performances of the cloud server are directly proportional to prices. Therefore, when the plurality of scheduling schemes and the corresponding performances of the cloud server are displayed, corresponding prices may also be displayed, to help the user make a choice, reducing costs of using the cloud server for the user.

In a possible implementation, when the virtual processor cores corresponding to the cloud server and the memory of the cloud server are provided by two or more physical processing nodes, the two or more physical processing nodes are located in a same computer.

The finally obtained cloud server can have an advantage that under the non-uniform memory access architecture, a processor accesses a local memory (memory) faster than a non-local memory, only when resources of physical processing nodes located in a same computer (a terminal device) are scheduled. Therefore, when the scheduling schemes are determined, for the scheduling scheme in which resources need to be provided by two or more physical processing nodes, the two or more physical processing nodes may be located in a same computer. In this manner, performance of the second processor corresponding to a case in which the second processor schedules the schedulable resources for the cloud server is improved.

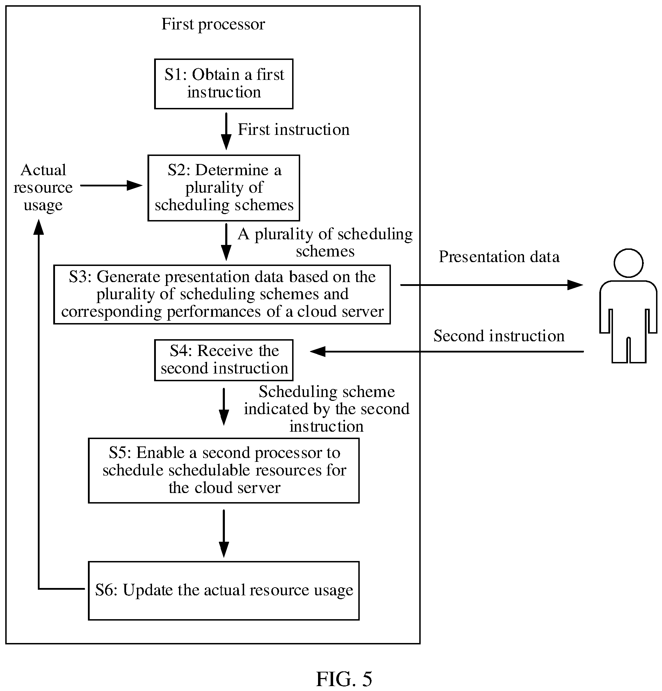

FIG. 5 is a schematic flowchart of a resource scheduling method according to an embodiment of this application.

As shown in FIG. 5, in a possible implementation, after step S3, the method further includes steps S4 to S6.

Step S4: Receive a second instruction from the user, where the second instruction indicates one of the plurality of scheduling schemes.

Step S5: Enable the second processor to schedule the schedulable resources for the cloud server according to the scheduling scheme indicated by the second instruction.

Step S6: Update the actual resource usage based on a status of resources of the second processor.

For example, after step S3, the presentation data can be output to the client (not shown), so that the interface that includes the plurality of scheduling schemes and the corresponding performances of the cloud server can be presented to the user on the client (not shown). If the user gives the second instruction (for example, via the client, which is not shown) in step S4, and the second instruction indicates the scheduling scheme in which one physical processing node (for example, the node A4) provides six virtual processor cores and a memory of 12 GB and the other physical processing node (for example, the node B4) provides two virtual processor cores and a memory of 4 GB, the following is performed: When the second processor is enabled to schedule the schedulable resources for the cloud server according to the scheduling scheme indicated by the second instruction in step S5, the first processor controls the second processor to complete actual resource scheduling, that is, to deduct six virtual processor cores and a memory of 12 GB from resources of the node A4, and to deduct two virtual processor cores and a memory of 4 GB from resources of the node B4. After step S5 is completed, the required cloud server with the target parameter is obtained.

After step S5 is performed, because the cloud server is successfully created, actual usage of resources of terminal devices/a terminal device on which the node A4 and/or the node B4 reside/resides changes, but actual usage of resources of terminal devices other than the terminal devices/the terminal device on which the node A4 and/or the node B4 reside/resides remains unchanged. Therefore, in step S6, when the actual resource usage is updated, based on the status of the resources of the second processor, only the actual usage of the resources of the terminal devices/the terminal device on which the node A4 and/or the node B4 reside/resides needs to be updated, reducing data processing costs.

In this manner, a cloud server meeting requirements can be obtained, and accuracy of actual resource usage can be ensured.

It can be easily found out based on existing solutions in the industry that in the conventional technology, a user usually adjusts a specification parameter of a cloud server subjectively. Based on this, this application further provides a plurality of manners for obtaining the first instruction, so that a user can proactively adjust a specification parameter and a performance of a cloud server, utilization of virtual processor cores and a memory of the cloud server of the user can be monitored, and an appropriate specification parameter and a performance can be recommended for the user based on a relationship between utilization of the cloud server of the user and a performance metric of the purchased cloud server over a period of time. The following describes the plurality of manners for obtaining the first instruction in this embodiment of this application.

In a possible implementation, the obtaining a first instruction includes:
receiving the first instruction from the user; or
obtaining the user's usage of a cloud server with a current parameter, where the current parameter includes a current quantity of virtual processor cores corresponding to the cloud server and a current memory size of the cloud server; and obtaining the first instruction based on the usage.

For example, when the user wants to purchase a new cloud server or the user wants to adjust a purchased cloud server, the first instruction may be sent by the user. In this case, the target parameter may be specified by the user. Alternatively, when the user already purchases a cloud server, the first processor may obtain the user's usage of the cloud server with a current parameter. The current parameter may be a specification parameter of the purchased cloud server, and may include a current quantity of virtual processor cores corresponding to the cloud server and a current memory size of the cloud server. The usage may be, for example, utilization of the virtual processor cores and a memory of the cloud server. The utilization may be determined by using the conventional technology.

If the utilization is lower than a performance metric of the cloud server with the current parameter over a period of time, it can be considered that a performance of the cloud server with the current parameter does not match requirements of the user, and the performance of the cloud server with the current parameter is higher than the requirements of the user. Likewise, if the utilization is higher than a performance metric of the cloud server with the current parameter, it can be considered that a performance of the cloud server with the current parameter does not match requirements of the user, and the performance of the cloud server with the current parameter is lower than the requirements of the user. Therefore, the first instruction can also be obtained based on the user's usage of the cloud server with the current parameter. The target parameter may include an appropriate quantity of virtual processor cores and an appropriate memory size that are determined based on the user's usage of the cloud server with the current parameter. In this case, when the user does not instruct to adjust the purchased cloud server, or the user instructs to adjust the purchased cloud server but does not indicate a specific target parameter, scheduling schemes may also be presented to the user, so that the user can obtain a cloud server with a more appropriate performance after selecting a resource scheduling scheme.

In this manner, the following can be both implemented, improving users' use experience: When a user wants to purchase a new cloud server or adjust a purchased cloud server, a plurality of scheduling schemes are determined based on a target parameter indicated by the user; and an appropriate target parameter is proactively determined and a plurality of scheduling schemes are recommended for a user who uses a cloud server with an inappropriate performance.

The following describes an example method for proactively determining an appropriate target parameter for a user who uses a cloud server with an inappropriate performance in this embodiment of this application.

In a possible implementation, the obtaining the first instruction based on the usage includes:
determining a minimum quantity of virtual processor cores and a minimum memory size that meet the usage; and
using the minimum quantity of virtual processor cores and the minimum memory size as the target parameter, to obtain the first instruction.

For example, assuming that a current parameter of a cloud server includes eight virtual processor cores and a memory of 16 G, if usage, for example, utilization of virtual processor cores and a memory of the cloud server, is 50%, a minimum quantity of virtual processor cores and a minimum memory size that meet the usage may be 4 (8×50%) and 8 G (16 G×50%), respectively. If usage, for example, utilization of virtual processor cores and a memory of the cloud server, is 70%, a minimum quantity of virtual processor cores and a minimum memory size that meet the usage may be 6 (a smallest integer greater than 8×70%) and 12 G (a smallest integer greater than 16 G×70%), respectively.

The minimum quantity of virtual processor cores and the minimum memory size that are determined in this manner may be used as the target parameter. In this case, even if a user does not indicate a specific target parameter, the first processor can determine an appropriate target parameter and obtain the first instruction, so that a plurality of scheduling schemes can still be presented, further improving user experience.

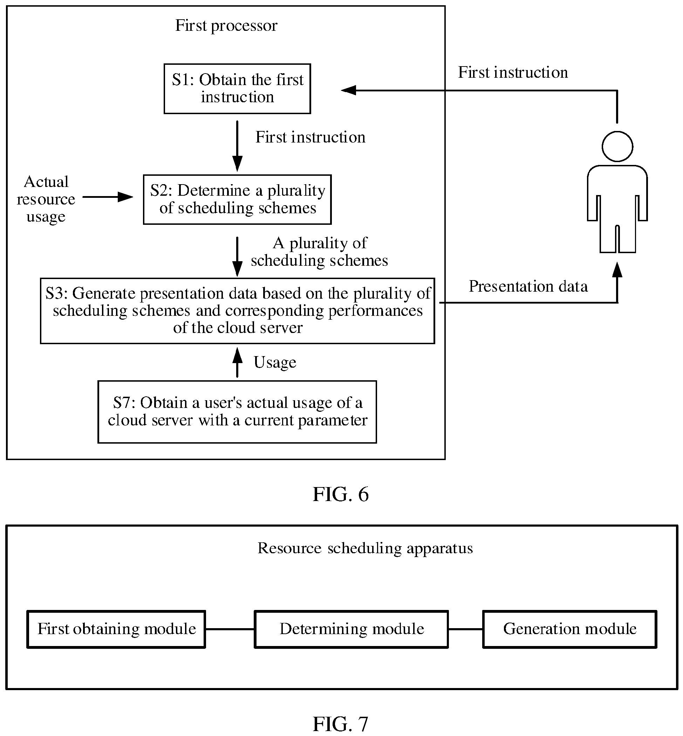

FIG. 6 is a schematic flowchart of a resource scheduling method according to an embodiment of this application.

As shown in FIG. 6, in a possible implementation, when the first instruction is from the user, the method further includes the following step.

Step S7: Obtain the user's usage of a cloud server with a current parameter, where the current parameter includes a current quantity of virtual processor cores corresponding to the cloud server and a current memory size of the cloud server; and
step S3 includes:
generating presentation data in descending order of degrees of proximity of the plurality of scheduling schemes to the usage, where in an interface presented based on the presentation data, the plurality of scheduling schemes are presented in descending order of the degrees of proximity of the plurality of scheduling schemes to the usage.

For example, when a user gives a first instruction (for example, via the client, which is not shown) and indicates a specific target parameter, the user's usage of a cloud server with a current parameter may also be obtained, and the usage is used for determining degrees of proximity of a plurality of scheduling schemes to the usage. The user's usage of the cloud server with the current parameter may further include a quantity of packets transmitted/received over an intranet and the like. When the plurality of scheduling schemes are determined, a maximum quantity of packets transmitted/received over an intranet under each scheduling scheme is fixed (for an example, refer to Table 1), and a difference between the maximum quantity of packets transmitted/received over an intranet and the quantity of packets transmitted/received over an intranet in the usage may be determined. A smaller difference may indicate a greater degree of proximity, and a larger difference may indicate a lesser degree of proximity. After the degrees of proximity are determined in this manner, when presentation data is generated, the presentation data may be generated in descending order of the degrees of proximity of the plurality of scheduling schemes to the usage. When the presentation data is output to the client (not shown), in an interface presented by the client (not shown) based on the presentation data, the plurality of scheduling schemes are presented in descending order of the degrees of proximity of the plurality of scheduling schemes to the usage.

Optionally, when presentation data is generated, scheduling schemes with great degrees of proximity may be alternatively determined based on relationships between degrees of proximity and a preset threshold, and the scheduling schemes are filtered out, to generate presentation data, so that the scheduling schemes with great degrees of proximity can be highlighted when being presented in a presentation interface, or the like, provided that in the interface presented based on the presentation data, a manner of presenting the plurality of scheduling schemes and corresponding performances of a cloud server is optimized. In this application, a specific manner of generating presentation data based on a plurality of scheduling schemes and corresponding performances of a cloud server is not limited.

In this manner, when the user indicates a specific target parameter, effect of presenting a plurality of scheduling schemes to be presented can be alternatively optimized based on the user's usage of the cloud server with the current parameter, improving capabilities of presenting a plurality of scheduling schemes based on presentation data generated by using the resource scheduling method.

An embodiment of this application further provides a resource scheduling apparatus. FIG. 7 is a diagram of a structure of a resource scheduling apparatus according to an embodiment of this application.

As shown in FIG. 7, in a possible implementation, the apparatus is used in a first processor. The apparatus includes:
a first obtaining module, configured to obtain a first instruction, where the first instruction indicates a target parameter of a cloud server;
a determining module, configured to determine, based on the first instruction and actual resource usage, a plurality of schemes for scheduling schedulable resources under the target parameter, where the schedulable resources are scheduled by at least one second processor that is based on a non-uniform memory access architecture, and when a second processor schedules the schedulable resources for the cloud server according to different scheduling schemes, performances of the cloud server are different; and
a generation module, configured to generate presentation data based on the plurality of scheduling schemes and the corresponding performances of the cloud server, where the presentation data is used for presenting an interface that includes the plurality of scheduling schemes and the corresponding performances of the cloud server.

In a possible implementation, the resources include virtual processor cores; for each second processor, the second processor includes at least one physical processing node; the physical processing node is configured to schedule and run virtual processor cores; and the target parameter includes a target quantity of virtual processor cores corresponding to the cloud server and a target memory size of the cloud server.

In a possible implementation, the plurality of scheduling schemes include: Virtual processor cores corresponding to the cloud server and a memory of the cloud server are provided by a single physical processing node; and/or virtual processor cores corresponding to the cloud server and a memory of the cloud server are provided by two or more physical processing nodes, and all the physical processing nodes provide a same quantity of virtual processor cores and a memory of a same size; and/or virtual processor cores corresponding to the cloud server and a memory of the cloud server are provided by two or more physical processing nodes, and at least two physical processing nodes provide different quantities of virtual processor cores and/or memories of different sizes.

In a possible implementation, when the virtual processor cores corresponding to the cloud server and the memory of the cloud server are provided by two or more physical processing nodes, the two or more physical processing nodes are located in a same computer.

In a possible implementation, the apparatus further includes:
a receiving module, configured to receive a second instruction from a user, where the second instruction indicates one of the plurality of scheduling schemes;
a scheduling module, configured to enable the second processor to schedule the schedulable resources for the cloud server according to the scheduling scheme indicated by the second instruction; and
an updating module, configured to update the actual resource usage based on a status of resources of the second processor.

In a possible implementation, the first obtaining module includes: a receiving unit, configured to receive the first instruction from the user; or an obtaining unit, configured to obtain the user's usage of a cloud server with a current parameter, where the current parameter includes a current quantity of virtual processor cores corresponding to the cloud server and a current memory size of the cloud server; and a processing unit, configured to obtain the first instruction based on the usage.

In a possible implementation, the processing unit includes: a determining subunit, configured to determine a minimum quantity of virtual processor cores and a minimum memory size that meet the usage; and a processing subunit, configured to use the minimum quantity of virtual processor cores and the minimum memory size as the target parameter, to obtain the first instruction.

**In** a possible implementation, when the first instruction is from the user, the apparatus further includes:
a second obtaining module, configured to obtain the user's usage of a cloud server with a current parameter, where the current parameter includes a current quantity of virtual processor cores corresponding to the cloud server and a current memory size of the cloud server; and
the generation module includes: a generation unit, configured to generate presentation data in descending order of degrees of proximity of the plurality of scheduling schemes to the usage, where in an interface presented based on the presentation data, the plurality of scheduling schemes are presented in descending order of the degrees of proximity of the plurality of scheduling schemes to the usage.

The first obtaining module, the determining module, the generation module, the receiving module, the scheduling module, the updating module, and the second obtaining module each may be implemented by software or by hardware. For example, the following uses the first obtaining module as an example to describe an implementation of the first obtaining module. Likewise, for implementations of the determining module, the generation module, the receiving module, the scheduling module, the updating module, and the second obtaining module, refer to the implementation of the first obtaining module.

When a module is used as an example of a software functional unit, the first obtaining module may include code that runs on a computing instance. The computing instance may include at least one of a physical host (computing device), a virtual machine, or a container. Further, there may be one or more computing instances. For example, the first obtaining module may include code that runs on a plurality of hosts/virtual machines/containers. It should be noted that the plurality of hosts/virtual machines/containers configured to run the code may be distributed in a same region (region) or different regions. Further, the plurality of hosts/virtual machines/containers configured to run the code may be distributed in a same availability zone (availability zone, AZ) or different AZs. Each AZ includes one data center or a plurality of data centers that are geographically close to each other. Usually, one region may include a plurality of AZs.

Likewise, the plurality of hosts/virtual machines/containers configured to run the code may be distributed in a same virtual private cloud (virtual private cloud, VPC) or a plurality of VPCs. Usually, a VPC is set in a region. To implement communication between two VPCs in a same region or communication between VPCs in different regions, a communication gateway needs to be set in each VPC. In this way, VPCs are interconnected via communication gateways.

When a module is used as an example of a hardware functional unit, the first obtaining module may include at least one computing device, for example, a server. Alternatively, the first obtaining module may be a device implemented by using an application-specific integrated circuit (application-specific integrated circuit, ASIC) or a programmable logic device (programmable logic device, PLD), or the like. The PLD may be implemented by a complex programmable logical device (complex programmable logical device, CPLD), a field-programmable gate array (field-programmable gate array, FPGA), a generic array logic (generic array logic, GAL), or any combination thereof.

The plurality of computing devices included in the first obtaining module may be distributed in a same region or different regions. The plurality of computing devices included in the first obtaining module may be distributed in a same AZ or different AZs. Likewise, the plurality of computing devices included in the first obtaining module may be distributed in a same VPC or a plurality of VPCs. The plurality of computing devices may be any combination of computing devices such as servers, ASICs, PLDs, CPLDs, FPGAs, and GALs.

It should be noted that in another embodiment, any one of the first obtaining module, the determining module, the generation module, the receiving module, the scheduling module, the updating module, and the second obtaining module may be configured to perform any step in the resource scheduling method, steps that the first obtaining module, the determining module, the generation module, the receiving module, the scheduling module, the updating module, and the second obtaining module are responsible for implementing may be specified as required, and the first obtaining module, the determining module, the generation module, the receiving module, the scheduling module, the updating module, and the second obtaining module respectively implement different steps in the resource scheduling method, to implement all functions of the resource scheduling apparatus.

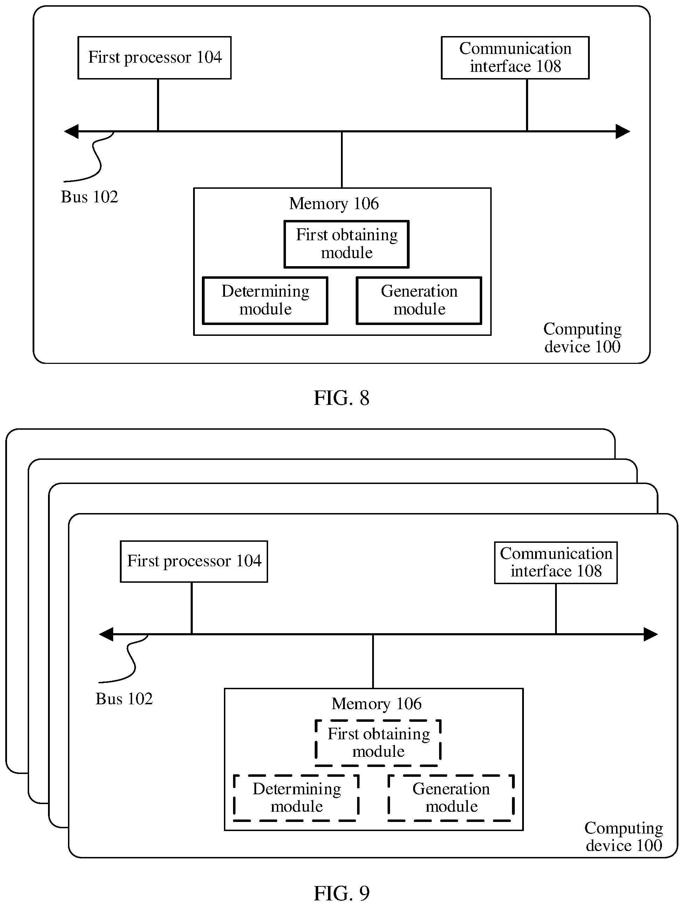

This application further provides a computing device 100. FIG. 8 is an example diagram of a structure of a computing device according to an embodiment of this application. As shown in FIG. 8, the computing device 100 includes a bus 102, a first processor 104, a memory 106, and a communication interface 108. The first processor 104, the memory 106, and the communication interface 108 communicate with each other through the bus 102. The computing device 100 may be a server or a terminal device. It should be understood that a quantity of processors and a quantity of memories in the computing device 100 are not limited in this application.

The bus 102 may be a peripheral component interconnect (peripheral component interconnect, PCI) bus, an extended industry standard architecture (extended industry standard architecture, EISA) bus, or the like. Buses may be classified into address buses, data buses, control buses, and the like. For ease of representation, only one line is used for representation in FIG. 8, but it does not mean that there is only one bus or only one type of bus. The bus 102 may include a pathway that transfers information between the components in the computing device 100 (for example, the memory 106, the first processor 104, and the communication interface 108).

The first processor 104 may include any one or more of processors such as central processing units (central processing units, CPUs), graphics processing units (graphics processing units, GPUs), micro processors (micro processors, MPs), or digital signal processors (digital signal processors, DSPs).

The memory 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid state drive (solid state drive, SSD).

The memory 106 stores executable program code. The first processor 104 executes the executable program code to respectively implement functions of the first obtaining module, the determining module, the generation module, and the like, to implement the resource scheduling method. In other words, the memory 106 stores instructions that are used for performing the resource scheduling method.

The communication interface 103 uses, for example but not limited to, a network interface card, or a transceiver module such as a transceiver, to implement communication between the computing device 100 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device such as a desktop computer, a notebook computer, or a smartphone.

FIG. 9 is an example diagram of a structure of a computing device cluster according to an embodiment of this application. As shown in FIG. 9, the computing device cluster includes at least one computing device 100. A memory 106 or memories 106 in one or more computing devices 100 in the computing device cluster may store same instructions that are used for performing the resource scheduling method.

In some possible implementations, alternatively, a memory 106 or memories 106 in one or more computing devices 100 in the computing device cluster each may store a part of instructions that are used for performing the resource scheduling method. In other words, a combination of one or more computing devices 100 may jointly execute the instructions that are used for performing the resource scheduling method.

It should be noted that memories 106 in different computing devices 100 in the computing device cluster may store different instructions, which are used for performing some functions of the resource scheduling apparatus, respectively. In other words, the instructions stored in the memories 106 in the different computing devices 100 can implement functions of one or more of the modules such as the first obtaining module, the determining module, and the generation module.

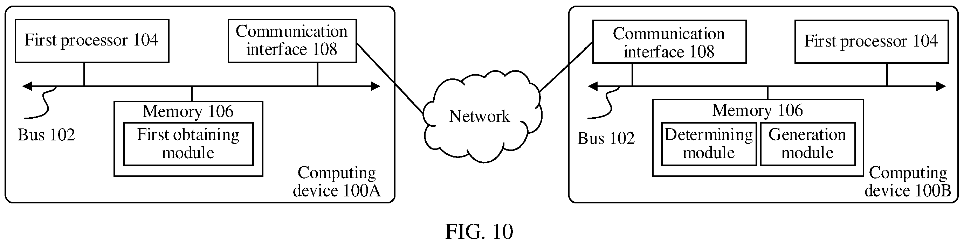

In some possible implementations, one or more computing devices in the computing device cluster may be connected via a network. The network may be a wide area network, a local area network, or the like. FIG. 10 is a diagram of a manner of connection between computing device clusters according to an embodiment of this application. As shown in FIG. 10, two computing devices 100A and 100B are connected via a network. Specifically, the two computing devices 100A and 100B are connected to the network through their respective communication interfaces. In this category of possible implementations, a memory 106 in the computing device 100A stores instructions that are used for performing functions of the first obtaining module, and a memory 106 in the computing device 100B stores instructions that are used for performing functions of the determining module and the generation module.

For the manner of connection between computing device clusters shown in FIG. 10, it may be considered that some steps in the resource scheduling method provided in this application are related to a user (for example, receiving a first instruction or a second instruction from a user) while some other steps are not related to a user (for example, determining a plurality of schemes for scheduling schedulable resources under a target parameter, or generating presentation data based on a plurality of scheduling schemes and corresponding performances of a cloud server). Therefore, it is considered that functions that are implemented by the determining module and the generation module and that are not related to a user are performed by the computing device 100B.

It should be understood that functions of the computing device 100A shown in FIG. 10 may be alternatively performed by a plurality of computing devices 100. Likewise, functions of the computing device 100B may be alternatively performed by a plurality of computing devices 100.

An embodiment of this application further provides a computer program product including instructions. The computer program product may be software or a program product that includes instructions and that can run on a computing device or be stored in any usable medium. When the computer program product is run on at least one computing device, the at least one computing device is enabled to perform the resource scheduling method.

An embodiment of this application further provides a computer-readable storage medium. The computer-readable storage medium may be any usable medium accessible by a computing device, or a data storage device such as a data center including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions. The instructions instruct a computing device to perform the resource scheduling method.

Finally, it should be noted that the foregoing embodiments are merely intended for describing the technical solutions of the present invention other than limiting the technical solutions of the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A resource scheduling method, wherein the method is used on a first processor, and the method comprises:
obtaining a first instruction, wherein the first instruction indicates a target parameter of a cloud server;
determining, based on the first instruction and actual resource usage, a plurality of schemes for scheduling schedulable resources under the target parameter, wherein the schedulable resources are scheduled by at least one second processor that is based on a non-uniform memory access architecture, and when a second processor schedules the schedulable resources for the cloud server according to different scheduling schemes, performances of the cloud server are different; and
generating presentation data based on the plurality of scheduling schemes and the corresponding performances of the cloud server, wherein the presentation data is used for presenting an interface that comprises the plurality of scheduling schemes and the corresponding performances of the cloud server.

2. The method according to claim 1, wherein the resources comprise virtual processor cores; for each second processor, the second processor comprises at least one physical processing node; the physical processing node is configured to schedule and run virtual processor cores; and the target parameter comprises a target quantity of virtual processor cores corresponding to the cloud server and a target memory size of the cloud server.

3. The method according to claim 2, wherein the plurality of scheduling schemes comprise:
virtual processor cores corresponding to the cloud server and a memory of the cloud server are provided by a single physical processing node; and/or
virtual processor cores corresponding to the cloud server and a memory of the cloud server are provided by two or more physical processing nodes, and all the physical processing nodes provide a same quantity of virtual processor cores and a memory of a same size; and/or
virtual processor cores corresponding to the cloud server and a memory of the cloud server are provided by two or more physical processing nodes, and at least two physical processing nodes provide different quantities of virtual processor cores and/or memories of different sizes.

4. The method according to claim 3, wherein when the virtual processor cores corresponding to the cloud server and the memory of the cloud server are provided by two or more physical processing nodes, the two or more physical processing nodes are located in a same computer.

5. The method according to any one of claims 1 to 4, wherein after the generating presentation data based on the plurality of scheduling schemes and the corresponding performances of the cloud server, the method further comprises:
receiving a second instruction from a user, wherein the second instruction indicates one of the plurality of scheduling schemes;
enabling the second processor to schedule the schedulable resources for the cloud server according to the scheduling scheme indicated by the second instruction; and
updating the actual resource usage based on a status of resources of the second processor.

6. The method according to any one of claims 1 to 5, wherein the obtaining a first instruction comprises:
receiving the first instruction from the user; or
obtaining the user's usage of a cloud server with a current parameter, wherein the current parameter comprises a current quantity of virtual processor cores corresponding to the cloud server and a current memory size of the cloud server; and
obtaining the first instruction based on the usage.

7. The method according to claim 6, wherein the obtaining the first instruction based on the usage comprises:
determining a minimum quantity of virtual processor cores and a minimum memory size that meet the usage; and
using the minimum quantity of virtual processor cores and the minimum memory size as the target parameter, to obtain the first instruction.

8. The method according to claim 6, wherein when the first instruction is from the user, the method further comprises:
obtaining the user's usage of a cloud server with a current parameter, wherein the current parameter comprises a current quantity of virtual processor cores corresponding to the cloud server and a current memory size of the cloud server; and
the generating presentation data based on the plurality of scheduling schemes and the corresponding performances of the cloud server comprises:
generating presentation data in descending order of degrees of proximity of the plurality of scheduling schemes to the usage, wherein in an interface presented based on the presentation data, the plurality of scheduling schemes are presented in descending order of the degrees of proximity of the plurality of scheduling schemes to the usage.

9. A resource scheduling apparatus, wherein the apparatus comprises:
a first obtaining module, configured to obtain a first instruction, wherein the first instruction indicates a target parameter of a cloud server;
a determining module, configured to determine, based on the first instruction and actual resource usage, a plurality of schemes for scheduling schedulable resources under the target parameter, wherein the schedulable resources are scheduled by at least one second processor that is based on a non-uniform memory access architecture, and when a second processor schedules the schedulable resources for the cloud server according to different scheduling schemes, performances of the cloud server are different; and
a generation module, configured to generate presentation data based on the plurality of scheduling schemes and the corresponding performances of the cloud server, wherein the presentation data is used for presenting an interface that comprises the plurality of scheduling schemes and the corresponding performances of the cloud server.

10. The apparatus according to claim 9, wherein the resources comprise virtual processor cores; for each second processor, the second processor comprises at least one physical processing node; the physical processing node is configured to schedule and run virtual processor cores; and the target parameter comprises a target quantity of virtual processor cores corresponding to the cloud server and a target memory size of the cloud server.

11. The apparatus according to claim 10, wherein the plurality of scheduling schemes comprise:
virtual processor cores corresponding to the cloud server and a memory of the cloud server are provided by a single physical processing node; and/or
virtual processor cores corresponding to the cloud server and a memory of the cloud server are provided by two or more physical processing nodes, and all the physical processing nodes provide a same quantity of virtual processor cores and a memory of a same size; and/or
virtual processor cores corresponding to the cloud server and a memory of the cloud server are provided by two or more physical processing nodes, and at least two physical processing nodes provide different quantities of virtual processor cores and/or memories of different sizes.

12. The apparatus according to claim 11, wherein when the virtual processor cores corresponding to the cloud server and the memory of the cloud server are provided by two or more physical processing nodes, the two or more physical processing nodes are located in a same computer.

13. The apparatus according to any one of claims 9 to 12, wherein the apparatus further comprises:
a receiving module, configured to receive a second instruction from a user, wherein the second instruction indicates one of the plurality of scheduling schemes;
a scheduling module, configured to enable the second processor to schedule the schedulable resources for the cloud server according to the scheduling scheme indicated by the second instruction; and
an updating module, configured to update the actual resource usage based on a status of resources of the second processor.

14. The apparatus according to any one of claims 9 to 13, wherein the first obtaining module comprises:
a receiving unit, configured to receive the first instruction from the user; or
an obtaining unit, configured to obtain the user's usage of a cloud server with a current parameter, wherein the current parameter comprises a current quantity of virtual processor cores corresponding to the cloud server and a current memory size of the cloud server; and
a processing unit, configured to obtain the first instruction based on the usage.

15. The apparatus according to claim 14, wherein the processing unit comprises:
a determining subunit, configured to determine a minimum quantity of virtual processor cores and a minimum memory size that meet the usage; and
a processing subunit, configured to use the minimum quantity of virtual processor cores and the minimum memory size as the target parameter, to obtain the first instruction.

16. The apparatus according to claim 14, wherein when the first instruction is from the user, the apparatus further comprises:
a second obtaining module, configured to obtain the user's usage of a cloud server with a current parameter, wherein the current parameter comprises a current quantity of virtual processor cores corresponding to the cloud server and a current memory size of the cloud server; and
the generation module comprises:
a generation unit, configured to generate presentation data in descending order of degrees of proximity of the plurality of scheduling schemes to the usage, wherein in an interface presented based on the presentation data, the plurality of scheduling schemes are presented in descending order of the degrees of proximity of the plurality of scheduling schemes to the usage.

17. A computing device cluster, comprising at least one computing device, wherein each computing device comprises a first processor and a memory; and
a first processor in the at least one computing device is configured to execute instructions stored in a memory in the at least one computing device, so that the computing device cluster performs the method according to any one of claims 1 to 8.

18. A computer-readable storage medium, comprising computer program instructions, wherein when the computer program instructions are executed by a computing device cluster, the computing device cluster performs the method according to any one of claims 1 to 8.

19. A computer program product comprising instructions, wherein when the instructions are run by a computing device cluster, the computing device cluster is enabled to perform the method according to any one of claims 1 to 8.
